# EUROPÄISCHE PATENTSCHRIFT

(11) **EP 3 214 670 B1**
(45) Veröffentlichungstag und Bekanntmachung des Hinweises auf die Patenterteilung: **04.12.2019**
(21) Anmeldenummer: 17000464.2
(22) Anmeldetag: 15.04.2016
(51) Int. Cl.: H01M 2/10, H01M 2/20, H01M 10/6554, H01M 10/613, H01M 10/42, H01M 10/625, H01M 10/647

(54) **BATTERIEMODUL FÜR EINE MEHRZAHL DERARTIGER BATTERIEMODULE AUFWEISENDE BATTERIEANORDNUNGEN**
BATTERY MODULE FOR BATTERY DEVICES COMPRISING A NUMBER OF SUCH BATTERY MODULES
MODULE DE BATTERIE POUR UN SYSTÈME DE BATTERIE COMPRENANT UNE PLURALITÉ DE TELS MODULES DE BATTERIE

(30) Priorität: 13.05.2015 DE 102015006168
(43) Veröffentlichungstag der Anmeldung: 06.09.2017
(62) Teilanmeldung aus: 16000856.1
(73) Patentinhaber: Voltabox AG, 33129 Delbrück (DE)
(72) Erfinder: Frers, Klaus Dieter, 33129 Delbrück (DE); Pampel, Jürgen, 32602 Vlotho (DE)
(74) Vertreter: Lelgemann, Karl-Heinz

(56) Entgegenhaltungen:
- CN-U- 204 315 644
- DE-A1-102011 075 044
- DE-A1-102013 204 180
- DE-A1-102013 213 540
- JP-A- 2013 025 983
- JP-A- 2014 035 970
- US-A1- 2012 021 260
- US-A1- 2014 342 195

## Beschreibung

Die Erfindung bezieht sich auf ein Batteriemodul nach dem Oberbegriff des Patentanspruchs 1.

Derartige Batteriemodule werden zu teilweise auch großvolumigen Batterieanordnungen zusammengefügt, um beispielsweise auch Fahrzeuge, wie Busse etc., mit elektrischer Antriebsenergie versorgen zu können. Aufgrund der großen Kapazitäten, die bei derartigen Fahrzeugen angefragt werden, muss eine große Anzahl von miteinander in Verbindung stehenden Batteriezellen und eine ebenfalls vergleichsweise große Anzahl von Batteriemodulen, in denen diese Batteriezellen zusammengefasst sind, zu einer Batterieanordnung zusammengefaßt werden, die dauerhaft und zuverlässig gewährleistet, dass die für den Betrieb des Fahrzeugs erforderliche Antriebsenergie zur Verfügung gestellt wird.

Aus der JP 2014 035970 A ist ein Batteriemodul bekannt, welches für eine Mehrzahl derartiger Batteriemodule aufweisende Batterieanordnungen verwendet werden kann. Das bekannte Batteriemodul hat eine Batterieeinheit, die eine Vielzahl miteinander verbundener Batteriezellen aufweist, eine Gehäusegruppe mit einer Bodenplatte und zwei einander gegenüberliegend angeordneten Seitenwandungen, die mit der Bodenplatte verbindbar sind, und eine Aufnahmeschale, die aus Kunststoff ausgebildet ist, auf der Innenseite der Bodenplatte ruht und an ihren Längsseiten in aufwärtiger Richtung vorstehende Abkantungen aufweist, zwischen denen ein unterer Abschnitt der Batterieeinheit des Batteriemoduls aufnehmbar ist.

Ausgehend von dem eingangs geschilderten Stand der Technik liegt der Erfindung die Aufgabe zugrunde, ein Batteriemodul für eine Mehrzahl derartiger Batteriemodule aufweisende Batterieanordnungen zur Verfügung zu stellen, welches dauerhaft betriebssicher und weitgehend störungsfrei funktionsfähig ist.

Diese Aufgabe wird erfindungsgemäß durch die Merkmale im kennzeichnenden Teil des Patentanspruchs 1 gelöst. Die abhängigen Ansprüche beschreiben bevorzugte Ausführungsformen.

Da das Batteriemodul eine Gehäusebaugruppe mit einer Bodenplatte und zwei einander gegenüberliegend angeordneten Seitenwandungen aufweist, die an ihren unteren Längskanten auf ihrer Innenseite Längsvorsprünge aufweisen, die in an zugeordneten Längskanten der Bodenplatte ausgebildete Längsausnehmungen eingreifen und vorzugsweise mittels Schraubverbindungen mit der Bodenplatte verbindbar sind, wobei darüber hinaus eine Aufnahmeschale vorgesehen ist, die aus Kunststoff ausgebildet ist, auf der Innenseite der Bodenplatte ruht und an ihren Längsseiten in aufwärtiger Richtung vorstehende Abkantungen aufweist, zwischen denen ein unterer Abschnitt der Batterieeinheit des Batteriemoduls aufnehmbar ist, lässt sich die Batterieeinheit in einfacher Weise innerhalb des Gehäuses bzw. der Gehäusebaugruppe aufnehmen, wobei einerseits eine gewisse Flexibilität des Batteriemoduls erreichbar ist und andererseits dennoch eine feste räumliche Fixierung der Batterieeinheit innerhalb des Gehäuses des Batteriemoduls gesichert wird.

Zwischen der Oberseite der Batterieeinheit und dem Gehäusedeckel ist die Steuerbaugruppe mit ihrer Steuerplatine und ihrem Tragrahmen angeordnet.

Zur Verbesserung der Wärmeabfuhr aus der Batterieeinheit kann es zweckmäßig sein, auf der Außenfläche der Seitenwandungen der Gehäusebaugruppe des Batteriemoduls eine Vielzahl Kühlrippen auszugestalten.

Alternativ oder kumulativ können die genannten Seitenwandungen der Gehäusebaugruppe auch wassergekühlt oder luftgekühlt ausgestaltet werden.

Um eine mehrere derartige Batteriemodule aufweisende Batterieanordnung kompakt und mechanisch stabil auszugestalten, ist es vorteilhaft, wenn jede an einer Seitenwandung eines benachbarten Batteriemoduls angeordnete Seitenwandung eine räumliche Struktur mit zumindest einem Vorsprungabschnitt und zumindest einem Ausnehmungsabschnitt aufweist, der in den zumindest einen Ausnehmungsabschnitt der zugeordneten Seitenwandung des benachbarten Batteriemoduls eingreift bzw. in den der zumindest eine Vorsprungabschnitt der zugeordneten Seitenwandung des benachbarten Batteriemoduls eingreift.

Eine weitere Erhöhung der Kompaktheit und der mechanischen Stabilität ist erreichbar, wenn die räumliche Struktur der Seitenwandungen zu der der Seitenwandungen benachbarter Batteriemodule komplementär gestaltet ist.

Um mehrere derartige Batteriemodule in einfacher Weise und mit einem geringen Aufwand aneinander anschließbar zu gestalten, ist es vorteilhaft, wenn zu dem Batteriemodul eine Anschlussplatte gehört, mittels der eine Gehäusebaugruppe des Batteriemoduls an einer Stirnseite der- bzw. desselben verschließbar ist und die für jede der beiden Stromschienen des Batteriemoduls einen Anschlussterminal aufweist, wobei jedes Anschlussterminal als Doppelmutterverbindung ausgebildet und an seiner Außenseite anschließbar ist.

Zweckmäßigerweise ist die Anschlussplatte an ihren Anschlussterminals mit Anschlussenden der Stromschienen des jeweiligen Batteriemoduls verschraubbar.

Mit einem vergleichsweise geringen technisch-konstruktiven Aufwand und mit hoher Zuverlässigkeit lassen sich die Batteriezellen einer Batterieeinheit miteinander verbinden, wenn jeder Zellverbinder des Batteriemoduls ein Kontaktglied, das dem Anschluss zweier Batteriezellen aneinander dient und hierzu einen ersten Kontaktabschnitt, der mit einem Zellterminal der einen Batteriezelle verbindbar ist, einen zweiten Kontaktabschnitt, der mit einem Zellterminal der anderen Batteriezelle verbindbar ist, und einen Ausgleichsabschnitt, der zwischen dem ersten und dem zweiten Kontaktabschnitt angeordnet ist und mittels dem z.B. aufgrund von Temperaturänderungen ud.dgl. auftretende Positions- und Fertigungsabweichungen zwischen den fixierten und mittels des Zellverbinders aneinander anzuschließenden Batteriezellen ausgleichbar sind aufweist, und ein Anschlussglied hat, mittels dem der Zellverbinder an die Steuerplatine der Steuerbaugruppe des Batteriemoduls anschließbar ist, das am Kontaktglied des Zellverbinders angebracht ist, mittels dem Statusparameter der Batteriezellen an die Steuerplatine der Steuerbaugruppe des Batteriemoduls weiterleitbar sind, mittels dem im Zusammenwirken mit der Steuerplatine ungleiche Ladezustände zwischen den beiden durch das Kontaktglied des Zellverbinders aneinander angeschlossenen Batteriezellen des Batteriemoduls vorzugsweise automatisch ausgleichbar sind, und dessen Flexibilität im Vergleich zu der des Kontaktglieds erheblich größer ist.

Vorzugsweise ist in der Steuerplatine des Batteriemoduls die Temperatur jeder Batteriezelle überwachbar.

Um Kurzschlüsse innerhalb eines Batteriemoduls zu verhindern, ist es zweckmäßig, wenn zwischen den Batteriezellen der Batterieeinheit eine Isolierfolie angeordnet ist, mittels der die einzelnen Batteriezellen der Batterieeinheit voneinander elektrisch isolierbar sind.

Je nach den räumlichen Verhältnissen, in denen eine mehrere Batteriemodule aufweisende Batterieanordnung zu installieren ist, kann es zweckmäßig sein, wenn die einzelnen Batteriemodule der Batterieanordnung in voneinander räumlich getrennten Teileinheiten angeordnet werden.

Wenn die Batterieeinheit des Batteriemoduls mit einer Stirnwand an einer in Bezug auf ein Gehäuse des Batteriemoduls ortsfest angeordneten Gehäusestirnwand anliegt und an der der ortsfesten Gehäusestirnwand entfernten Stirnwand der Batterieeinheit ein Spannglied angeordnet ist, welches in Längsrichtung der Batterieeinheit auf die ortsfeste Gehäusestirnwand zu verstellbar ist, lässt sich mittels des Sperrglieds eine gegen jedwede mechanische Beanspruchungen dauerhaft aufrecht erhaltbare räumliche Fixierung der Batterieeinheiten des Batteriemoduls aneinander und in Bezug auf das Gehäuse des Batteriemoduls sicherstellen.

In technisch-konstruktiv vergleichsweise wenig aufwendiger Weise lässt sich diese räumliche Fixierung bewerkstelligen, wenn zwischen der ortsfesten Gehäusestirnwand des Batteriemoduls und dessen Spannglied Stäbe angeordnet sind, die spanngliedseitig Gewindeabschnitte mit Spannmuttern aufweisen, mittels denen das Spannglied in Richtung zur ortsfesten Gehäusestirnwand verstellbar ist. Durch Drehen der Spannmuttern, die zwecks Ausgleich von Fertigungstoleranzen od.dgl. auch in unterschiedlicher Weise gedreht werden können, kann die räumliche Fixierung zwischen den Batteriezellen der Batterieeinheit des Batteriemoduls wirksam hergestellt werden.

Im Folgenden wird die Erfindung anhand von Ausführungsformen unter Bezugnahme auf die Zeichnungen näher erläutert.

Es zeigen:
- Figur 1: eine perspektivische Explosionsdarstellung eines Ausführungsbeispiels eines erfindungsgemäßen Batteriemoduls, das zu einer mehrere derartiger Batteriemodule aufweisenden Batterieanordnung zusammenstellbar ist;
- Figur 2: eine perspektivische Darstellung einer Steuerbaugruppe des in Figur 1 gezeigten Ausführungsbeispiels des erfindungsgemäßen Batteriemoduls;
- Figur 3: eine perspektivische Darstellung einer Batterieeinheit der in Figur 1 gezeigten Ausführungsform des erfindungsgemäßen Batteriemoduls;

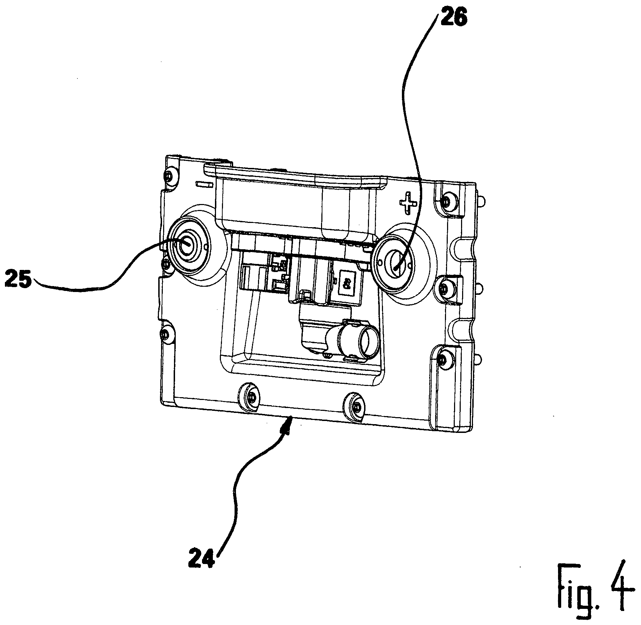

- Figur 4: eine perspektivische Darstellung einer Anschlußplatte des in Figur 1 gezeigten Ausführungsbeispiels des erfindungsgemäßen Batteriemoduls;
- Figur 5: eine perspektivische Darstellung zweier erfindungsgemäßer Batteriemodule in einer abgewandelten Ausführungsform;
- Figur 6: eine perspektivische Darstellung der beiden in Figur 5 gezeigten Batteriemodule im aneinander montierten Zustand; und
- Figur 7: eine perspektivische Prinzipdarstellung eines Zellverbinders für das erfindungsgemäße Batteriemodul.

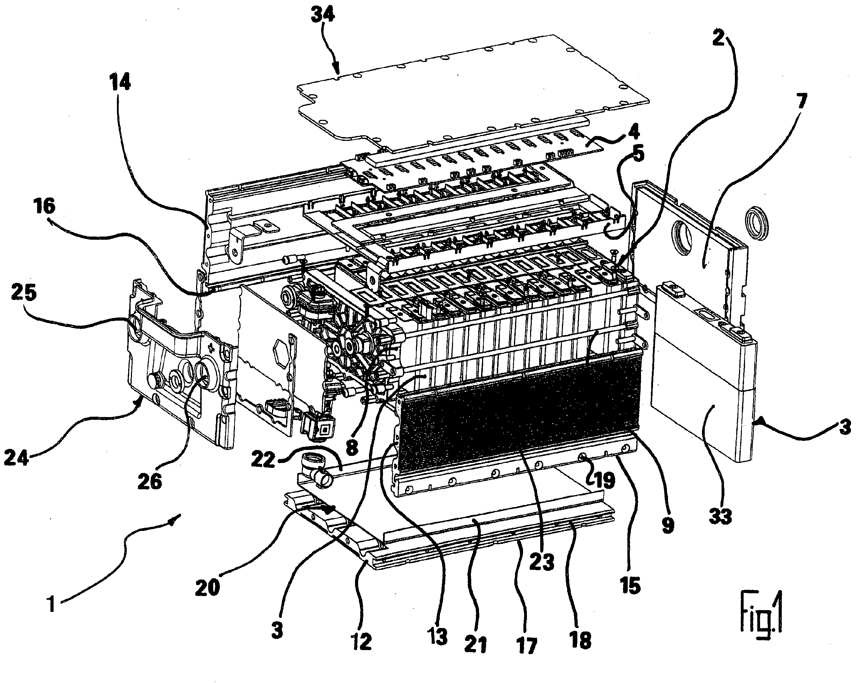

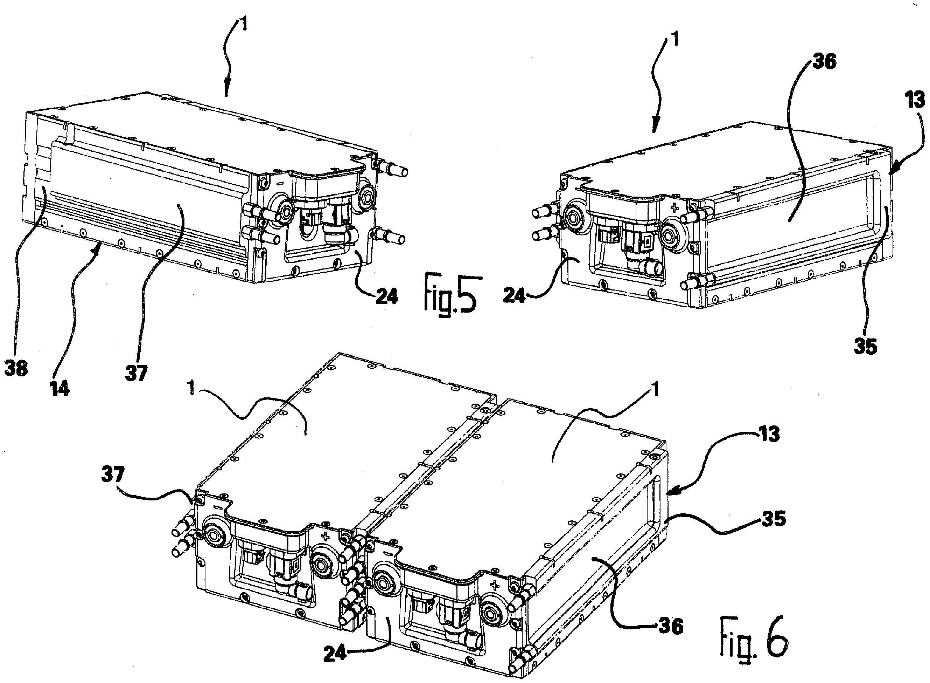

Ein in Figur 1 anhand eines erfindungsgemäßen Ausführungsbeispiels dargestelltes Batteriemodul 1 ist Bestandteil einer in den Figuren nicht dargestellten, mehrere derartiger Batteriemodule 1 aufweisenden Batterieanordnung. Wie die Batteriemodule 1 hierzu zusammengefügt werden, ergibt sich beispielsweise aus Figur 6, welche zwei miteinander verbundene Batteriemodule 1 zeigt.

Zu dem Batteriemodul 1 gehören eine Batterieeinheit 2, die durch eine Vielzahl miteinander verbundener Batteriezellen 3 gebildet wird, und eine Steuerbaugruppe 4, 5, zu der eine Steuerplatine 4 und ein Tragrahmen 5 gehören.

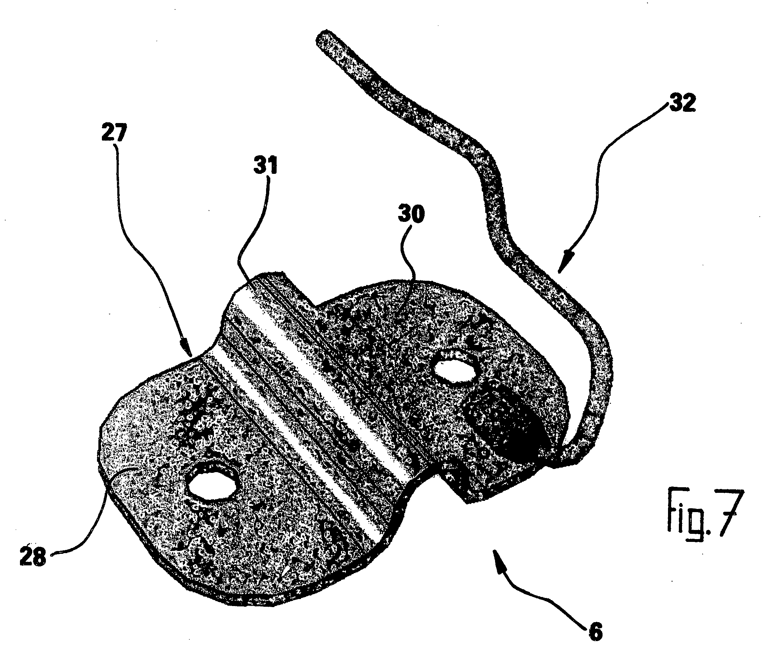

Die Batteriezellen 3 der Batterieeinheit 2 des Batteriemoduls 1 sind untereinander mittels am besten in Figur 7 dargestellter Zellverbinder 6 verbunden, wobei jeder Zellverbinder 6 jeweils zwei Batteriezellen 3 der Batterieeinheit 2 aneinander anschließt. In Figur 1 ist eine der Batteriezellen 3 in einer von den übrigen Batteriezellen 3 der Batterieeinheit 2 entfernten Position dargestellt.

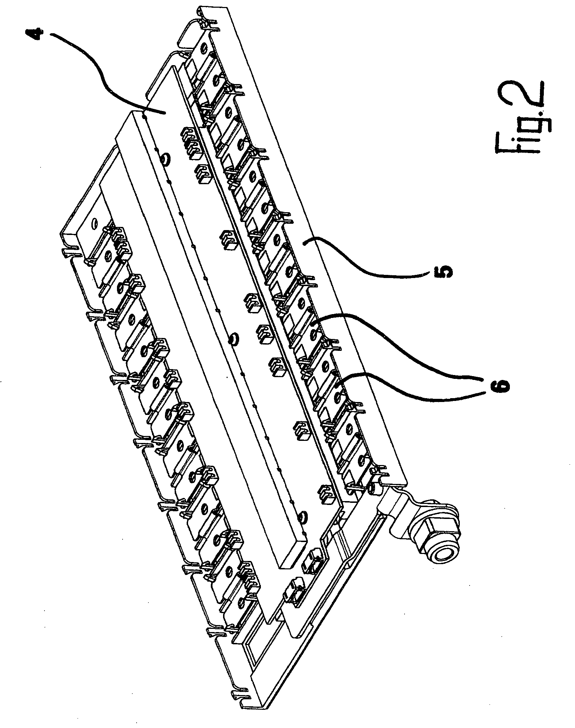

Die in Figur 2 dargestellte Steuerbaugruppe 4, 5, zu der die Steuerplatine 4 und der Tragrahmen 5 gehören, dient der Überwachung und Regelung des Betriebs der Batterieeinheit 2 und ist auf der Batterieeinheit 2 gelagert. Am Tragrahmen 5 der Steuerbaugruppe 4, 5 sind die Zellverbinder 6 vorgesehen, mittels denen die entsprechend zugeordneten Zellterminale 29 der Batteriezellen 3 der Batterieeinheit 2 miteinander verbunden sind. Hierzu stehen die Zellterminale 29 der Batteriezellen 3 in den Tragrahmen 5 der Steuerbaugruppe 4, 5 vor.

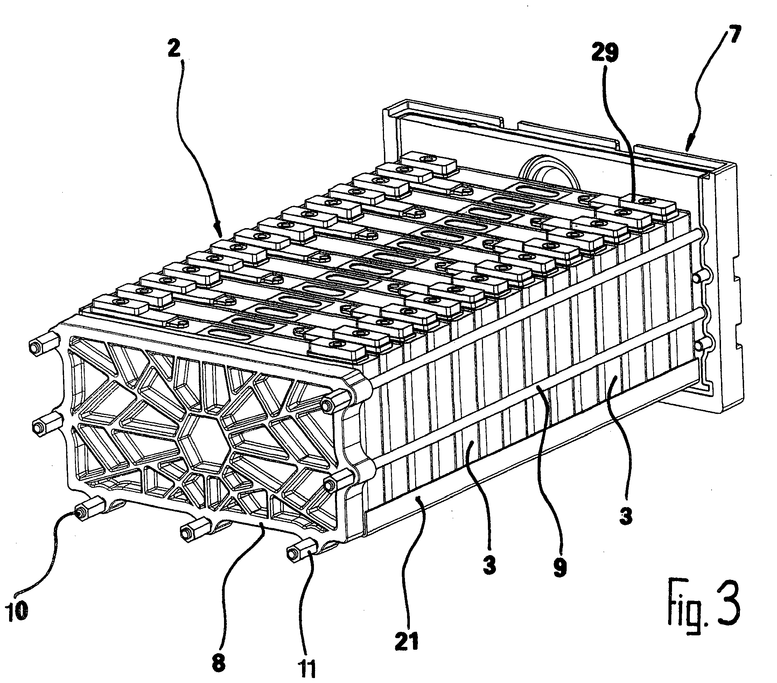

Wie sich am besten aus Figur 3 ergibt, ist die Batterieeinheit 2 mit ihrer in Figur 3 rechten Stirnwand in Anlage an der Innenseite einer Gehäusestirnwand 7 angeordnet, die ihrerseits in Bezug auf eine Gehäusebaugruppe 12, 13, 14, zu der eine Bodenplatte 12 und zwei Seitenwandungen 13, 14 gehören, ortsfest ist. An ihrer der Gehäusestirnwand 7 entfernten, in Figur 3 linken Stirnwand ist die Batterieeinheit 2 mit einem Spannglied 8 versehen. Das Spannglied 8 bildet quasi die andere Stirnwand der Batterieeinheit 2.

Zwischen der an der Gehäusestirnwand 7 anliegenden Stirnwand der Batterieeinheit 2 und dem Spannglied 8 erstrecken sich Stäbe 9, die an ihren dem Spannglied 8 zugeordneten Endabschnitten mit Gewindeabschnitten 10 ausgebildet sind. Die Gewindeabschnitte 10 durchdringen am Spannglied 8 vorgesehene Öffnungen und tragen an ihren freien Enden Spannmuttern 11. Durch entsprechende Drehung der Spannmuttern 11 kann das Spannglied 8 in Richtung auf die der Gehäusestirnwand 7 zugeordnete Stirnwand der Batterieeinheit 2 verstellt werden, wodurch die Batteriezellen 3 der Batterieeinheit 2 aneinandergedrückt werden.

Zwischen den einzelnen Batteriezellen 3 der Batterieeinheit 2 ist jeweils eine Isolierfolie 33 vorgesehen, mittels der die einzelnen Batteriezellen 3 der Batterieeinheit 2 voneinander elektrisch isoliert sind. Dies gilt auch dann, wenn die Batteriezellen 3 der Batterieeinheit 2 mittels des Spannglieds 8 fest gegeneinander verpresst werden.

Zu dem Batteriemodul 1, wie es in Figur 1 dargestellt ist, gehört die Gehäusebaugruppe 12, 13, 14 mit der Bodenplatte 12 und den beiden einander gegenüberliegend angeordneten Seitenwandungen 13, 14. Die beiden Seitenwandungen 13, 14 haben, wie aus Figur 1 hervorgeht, an ihren unteren Längskanten 15 auf der der Batterieeinheit 2 zugewandten Innenseite jeweils einen Längsvorsprung 16, der sich etwa über die gesamte Länge der jeweiligen Seitenwandung 13, 14 erstreckt. Diesen Längsvorsprüngen 16 der beiden Seitenwandungen 13, 14 zugeordnet sind an den beiden Längskanten 17 der Bodenplatte 12 ausgebildete Längsausnehmungen 18. Die beiden seitenwandungsseitigen Längsvorsprünge 16 greifen in die ihnen zugeordnete bodenplattenseitige Längsausnehmung 18 ein, wodurch sich eine formschlüssige Verbindung zwischen der Bodenplatte 12 einerseits und den beiden Seitenwandungen 13, 14 andererseits ergibt. Zur Fixierung der beiden Seitenwandungen 13, 14 an der Bodenplatte 12 sind Schraubverbindungen 19 vorgesehen, die sich mit Abstand zueinander im Bereich der unteren Längskanten 15 der beiden Seitenwandungen 13, 14 erstrecken, wobei deren Schrauben in entsprechend an den Längskanten 17 der Bodenplatte vorgesehene Gewindebohrungen eingreifen.

Zwischen der der Batterieeinheit 2 bzw. den Batteriezellen 3 derselben zugewandten Oberseite der Bodenplatte 12 und der Unterseite der Batterieeinheit 2 bzw. der Batteriezellen 3 ist eine Aufnahmeschale 20 angeordnet, die im Falle der dargestellten Ausführungsform aus Kunststoff ausgebildet ist. Die Aufnahmeschale 20 ruht auf der Innenseite der Bodenplatte 12 und hat an ihren beiden Längsseiten Abkantungen 21, 22, die in Richtung zur Batterieeinheit 2 vorstehen und sich über die gesamte Länge der Aufnahmeschale 20 erstrecken. Zwischen den beiden Abkantungen 21, 22 der Aufnahmeschale 20 ist ein unterer Abschnitt der Batterieeinheit 2 bzw. der Batteriezellen 3 aufnehm- und halterbar.

Die beiden Seitenwandungen 13, 14 der Gehäusebaugruppe 12, 13, 14 des Batteriemoduls 1 sind im Falle des in Figur 1 dargestellten Ausführungsbeispiels des Batteriemoduls 1 mit einer Vielzahl Kühlrippen 23 ausgebildet, die sich parallel zueinander und mit einem vergleichsweise geringen Abstand zueinander über die Länge der Seitenwandungen 13, 14 erstrecken.

Alternativ oder kumulativ können die Seitenwandungen 13, 14 der Gehäusebaugruppe 12, 13, 14 auch wasser- oder luftgekühlt werden.

Bei einer anhand der Figuren 5 und 6 erläuterten Ausführungsform des Batteriemoduls 1 ist die Seitenwandung 13 desselben mit einem im dargestellten Ausführungsbeispiel etwa U-förmigen Vorsprungabschnitt 35 ausgestaltet, der im dargestellten Ausführungsbeispiel an der der Gehäusestirnwand 7 abgewandten Stirnseite der Batterieeinheit 2 offen und im Bereich der Gehäusestirnwand 7 geschlossen ist. Zwischen diesem U-förmigen Vorsprungabschnitt 35 ist ein Ausnehmungsabschnitt 36 vorgesehen.

Auf der anderen Seitenwandung 14 der Gehäusebaugruppe 12, 13, 14 ist, wie sich am besten aus der Darstellung des in Figur 5 links angeordneten Batteriemoduls 1 ergibt, ein Vorsprungabschnitt 37 ausgebildet, der hinsichtlich seiner Form komplementär zu dem Ausnehmungsabschnitt 36 der ersten Seitenwandung 13 ausgebildet ist. Entsprechend hat die mit dem Vorsprungabschnitt 37 versehene Seitenwandung 14 einen Ausnehmungsabschnitt 38, der den Vorsprungabschnitt 37 umgibt und der hinsichtlich seiner Form komplementär zum U-förmigen Vorsprungabschnitt 35 der ersten Seitenwandung 13 gestaltet ist.

Wenn zwei Batteriemodule 1, wie dies in Figur 6 dargestellt ist, zu einer Batterieanordnung zusammengefügt werden, sind die Vorsprungabschnitte 35 der einander benachbarten Batteriemodule 1 in den Ausnehmungsabschnitten 38 formschlüssig aufgenommen, wobei die Vorsprungabschnitte 37 jeweils in den Ausnehmungsabschnitten 36 der benachbarten Batteriemodule aufgenommen sind. Hierdurch ergibt sich ein stabiles Gefüge der aus den Batteriemodulen 1 ausgestalteten Batterieanordnungen.

An ihrer der Gehäusestirnwand 7 entgegengesetzten Stirnseite ist die Gehäusebaugruppe 12, 13, 14 des Batteriemoduls 1 mittels einer Anschlussplatte 24 geschlossen. Die Anschlussplatte 24 ist für jede der beiden Stromschienen der Batterieeinheit 2 mit einem Anschlussterminal 25 bzw. 26 versehen. Die beiden Anschlußterminale 25, 26 sind jeweils als Doppelmutterverbindung ausgebildet und an ihren Außenseiten mit einem vergleichsweise geringen technisch-konstruktiven Aufwand an elektrische Elemente anschließbar. Auf der Innenseite der Anschlussplatte 24 sind deren Anschlussterminals 25, 26 mit ihnen zugeordneten Anschlussenden der beiden Stromschienen des Batteriemoduls 1 bzw. der Batterieeinheit 2 verschraubbar.

Die Zellverbinder 6 des Batteriemoduls 1 sind, wie am besten aus den Figuren 2 und 7 hervorgeht, zusammengesetzt aus einem Kontaktglied 27 und einem Anschlussglied 32.

Das Kontaktglied 27 dient dem Anschluss jeweils zweier Batteriezellen 3 der Batterieeinheit 2 aneinander und hat hierzu einen ersten Kontaktabschnitt 28, der mit einem Zellterminal 29 der einen Batteriezelle 3 verbindbar ist, und einen zweiten Kontaktabschnitt 30, der mit einem Zellterminal 29 der anderen Batteriezelle 3 verbindbar ist. Zwischen dem ersten Kontaktabschnitt 28 und dem zweiten Kontaktabschnitt 30 des Kontaktglieds 27 ist ein Ausgleichabschnitt 31 ausgebildet. Mittels dieses Ausgleichsabschnitts sind aufgrund von Temperaturänderungen ud.dgl. auftretende Positions- und Fertigungsabweichungen zwischen den fixierten und mittels des Zellverbinders 6 aneinander anzuschließenden Batteriezellen 3 ausgleichbar.

Das Anschlussglied 32 des Kontaktglieds 27 dient dem elektrischen bzw. steuerungstechnischen Anschluss des Zellverbinders 6 an die Steuerplatine 4 der Steuerbaugruppe 4, 5. Das Anschlussglied 32 ist am Kontaktglied 27 des Zellverbinders 6 angebracht. Mittels dem Anschlussglied 32 sind Statusparameter der an das betreffende Kontaktglied 27 angeschlossenen Batteriezellen 3 der Batterieeinheit 2 des Batteriemoduls an die Steuerplatine 4 der Steuerbaugruppe 4, 5 des Batteriemoduls 1 weiterleitbar. Entsprechend können aufgrund dieser an die Steuerplatine weitergeleiteter Statusparameter ungleiche Ladezustände zwischen den beiden durch das betreffende Kontaktglied 27 des Zellverbinders 6 aneinander angeschlossenen Batteriezellen 3 des Batteriemoduls ausgeglichen werden, wobei dies in der dargestellten Ausführungsform vorzugsweise automatisch erfolgt. Das Anschlussglied 32 ist mit einer Flexibilität ausgestaltet, die im Vergleich zu der des Kontaktglieds 27 erheblich größer ist.

Dadurch, dass jeder Zellverbinder 6 der Batterieeinheit 2 mit einem Anschlussglied 32 ausgerüstet und so an die Steuerplatine 4 der Steuerbaugruppe 4, 5 des Batteriemoduls 1 angeschlossen ist, kann die Temperatur jeder einzelnen Batteriezelle 3 der Batterieeinheit 2 überwacht werden.

Aus Figur 1 geht hervor, dass die die Steuerplatine 4 und den Tragrahmen 5 aufweisende Steuerbaugruppe 4, 5 des Batteriemoduls 1 auf der Oberseite der Batterieeinheit 2 ruht. Oberhalb dieser Steuerbaugruppe 4, 5 ist ein Gehäusedeckel 34 angeordnet, mittels dem das Gehäuse bzw. die Gehäusebaugruppe 12, 13, 14 des Batteriemoduls 1 an deren Oberseite abschließbar ist.

Wie dies in Figur 6 beispielhaft angedeutet ist, können die vorstehend geschilderten Batteriemodule 1 zu eine beliebige Anzahl derartiger Batteriemodule 1 aufweisenden Batterieanordnungen zusammengestellt werden. Hierbei ist es möglich, dass zu einer Batterieanordnung, deren Batteriemodule 1 aneinander angeschlossen sind, Teileinheiten mit jeweils mehreren Batteriemodulen 1 gehören, die voneinander räumlich getrennt angeordnet sind.

## Patentansprüche

1. Batteriemodul für eine Mehrzahl derartiger Batteriemodule (1) aufweisende Batterieanordnungen, mit einer Batterieeinheit (2), die eine Vielzahl miteinander verbundener Batteriezellen (3) aufweist, einer Gehäusebaugruppe (12, 13, 14) mit einer Bodenplatte (12) und zwei einander gegenüberliegend angeordneten Seitenwandungen (13, 14), die vorzugsweise mittels Schraubverbindungen (19) mit der Bodenplatte (12) verbindbar sind, einer Aufnahmeschale (20), die aus Kunststoff ausgebildet ist, auf der Innenseite der Bodenplatte (12) ruht und an ihren Längsseiten in aufwärtiger Richtung vorstehende Abkantungen (21, 22) aufweist, zwischen denen ein unterer Abschnitt der Batterieeinheit (2) des Batteriemoduls (1) aufnehmbar ist, und einem Gehäusedeckel (34), **dadurch gekennzeichnet, dass** das Batteriemodul (1) eine Steuerbaugruppe (4, 5) hat, die eine Steuerplatine (4) zur Überwachung und Regelung des Betriebs der Batterieeinheit (2) und einen Tragrahmen (5) aufweist, der auf der Batterieeinheit (2) lagert und an dem Zellverbinder (6) angeordnet sind, mittels denen jeweils zwei Batteriezellen (3) der Batterieeinheit (2) untereinander verbindbar sind, dass die Steuerbaugruppe (4, 5) mit ihrer Steuerplatine (4) und ihrem Tragrahmen (5) zwischen der Oberseite der Batterieeinheit (2) und dem Gehäusedeckel (34) angeordnet ist, und dass die Seitenwandungen (13, 14) an ihren unteren Längskanten (15) auf ihrer Innenseite Längsvorsprünge (16) aufweisen, die in an zugeordneten Längskanten (17) der Bodenplatte (12) ausgebildete Längsausnehmungen (18) eingreifen.

2. Batteriemodul nach Anspruch 1, dessen Seitenwandungen (13, 14) auf ihrer Außenfläche mit einer Vielzahl Kühlrippen (23) ausgebildet sind.

3. Batteriemodul nach Anspruch 1 oder 2, dessen Seitenwandungen (13, 14) wassergekühlt sind.

4. Batteriemodul nach Anspruch 1 oder 2, dessen Seitenwandungen (13, 14) luftgekühlt sind.

5. Batteriemodul nach einem der Ansprüche 1 bis 4, bei dem die Seitenwandung (14, 13) eine räumliche Struktur mit zumindest einem Vorsprungabschnitt (35, 37) und zumindest einem Ausnehmungsabschnitt (36, 38) aufweist, der in den zumindest einen Ausnehmungsabschnitt (36, 38) der zugeordneten Seitenwandung (13, 14) eines benachbarten Batteriemoduls (1) geeignet ist, einzugreifen bzw. in den der zumindest eine Vorsprungabschnitt (35, 37) der zugeordneten Seitenwandung (13, 14) eines benachbarten Batteriemoduls (1) geeignet ist, einzugreifen.

6. Batteriemodul nach Anspruch 5, bei dem die räumliche Struktur der Seitenwandungen (13, 14) zu der der Seitenwandungen (14, 13) benachbarter Batteriemodule (1) komplementär gestaltet ist.

7. Batteriemodul nach einem der Ansprüche 1 bis 6, mit einer Anschlussplatte (24), mittels der die Gehäusebaugruppe (12, 13, 14) des Batteriemoduls (1) an einer Stirnseite der- bzw. desselben verschließbar ist und die für jede der beiden Stromschienen des Batteriemoduls (1) ein Anschlussterminal (25, 26) aufweist, wobei jedes Anschlussterminal (25, 26) als Doppelmutterverbindung ausgebildet und an seiner Außenseite anschließbar ist.

8. Batteriemodul nach Anspruch 7, dessen Anschlussplatte (24) an ihren Anschlussterminals (25, 26) mit Anschlussenden der Stromschienen des Batteriemoduls (1) verschraubbar ist.

9. Batteriemodul nach einem der Ansprüche 1 bis 8, bei dem jeder Zellverbinder (6) ein Kontaktglied (27), das dem Anschluss zweier Batteriezellen (3) aneinander dient und hierzu einen ersten Kontaktabschnitt (28), der mit einem Zellterminal (29) der einen Batteriezelle (3) verbindbar ist, einen zweiten Kontaktabschnitt (30), der mit einem Zellterminal (29) der anderen Batteriezelle (3) verbindbar ist, und einen Ausgleichabschnitt (31), der zwischen dem ersten (28) und dem zweiten Kontaktabschnitt (30) angeordnet ist und mittels dem auftretende Positions- und Fertigungsabweichungen zwischen den fixierten und mittels des Zellverbinders (6) aneinander anzuschließenden Batteriezellen (3) ausgleichbar sind, aufweist, und ein Anschlussglied (32) hat, mittels dem der Zellverbinder (6) an die Steuerplatine (4) der Steuerbaugruppe (4, 5) des Batteriemoduls (1) anschließbar ist, das am Kontaktglied (27) des Zellverbinders (6) angebracht ist, mittels dem Statusparameter der Batteriezellen (3) an die Steuerplatine (4) der Steuerbaugruppe (4, 5) des Batteriemoduls (1) weiterleitbar sind, mittels dem im Zusammenwirken mit der Steuerplatine (4) ungleiche Ladezustände zwischen den beiden durch das Kontaktglied (27) des Zellverbinders (6) aneinander angeschlossenen Batteriezellen (3) des Batteriemoduls (1) vorzugsweise automatisch ausgleichbar sind, und dessen Flexibilität im Vergleich zu der des Kontaktglieds (27) erheblich größer ist.

10. Batteriemodul nach Anspruch 9, in dessen Steuerplatine (4) die Temperatur jeder Batteriezelle (3) überwachbar ist.

11. Batteriemodul nach einem der Ansprüche 1 bis 10, bei dem zwischen den Batteriezellen (3) der Batterieeinheit (2) eine Isolierfolie (33) angeordnet ist, mittels der die einzelnen Batteriezellen (3) der Batterieeinheit (2) voneinander elektrisch isolierbar sind.

12. Batterieanordnung aus einer Mehrzahl von Batteriemodulen (1) nach einem der Ansprüche 1 bis 11, bei der die einzelnen Batteriemodule (1) in voneinander räumlich getrennten Teileinheiten angeordnet sind.

13. Batteriemodul nach einem der Ansprüche 1 bis 11, bei dem die Batterieeinheit (2) mit einer Stirnwand an einer in Bezug auf ein Gehäuse (12, 13, 14) des Batteriemoduls (1) ortsfest angeordneten Gehäusestirnwand (7) anliegt und an der der ortsfesten Gehäusestirnwand (7) entfernten Stirnwand der Batterieeinheit (2) ein Spannglied (8) angeordnet ist, welches in Längsrichtung der Batterieeinheit (2) auf die ortsfeste Gehäusestirnwand (7) zu verstellbar ist.

14. Batteriemodul nach Anspruch 13, zwischen dessen ortsfester Gehäusestirnwand (7) und dessen Spannglied (8) Stäbe (9) angeordnet sind, die spanngliedseitig Gewindeabschnitte (10) mit Spannmuttern (11) aufweisen, mittels denen das Spannglied (8) in Richtung zur ortsfesten Gehäusestirnwand (7) verstellbar ist.

## Claims

1. A battery module for battery arrangements having a plurality of such battery modules (1), with a battery unit (2) having a plurality of inter-connected battery cells (3), a housing assembly (12, 13, 14) having a bottom plate (12) and two side walls (13, 14) arranged opposite from each other, which preferably can be connected to the bottom plate (12) via screw connections (19), a holder (20) designed from plastic, which rests on the inside of the bottom plate (12) and has protruding edges (21, 22) pointing upward at its longitudinal sides, between which edges a lower section of the battery unit (2) of the battery module (1) can be received, and a housing cover (34), **characterized in that** the battery module (1) has a control assembly (4, 5) having a control circuit board (4) for monitoring and regulating the operation of the battery unit (2) and a support frame (5) which rests on the battery unit (2) and on which cell connectors (6) are arranged, by means of which two respective battery cells (3) of the battery unit (2) can be connected with each other, that the control assembly (4, 5) with its control circuit board (4) and its support frame (5) is arranged between the top of the battery unit (2) and the housing cover (34), and that the side walls (13, 14) have longitudinal protrusions (16) on the inside of their bottom longitudinal edges (15), which longitudinal protrusions (16) engage with longitudinal recesses (18) formed on allocated longitudinal edges (17) of the bottom plate (12).

2. The battery module according to Claim 1, whose side walls (13, 14) are designed with a plurality of cooling fins (23) on their exterior surfaces.

3. The battery module according to Claim 1 or 2, whose side walls (13, 14) are water-cooled.

4. The battery module according to Claim 1 or 2, whose side walls (13, 14) are air-cooled.

5. The battery module according to any one of Claims 1 to 4, in which the side wall (13, 14) has a spatial structure having at least one protruding section (35, 37) and at least one recessed section (36, 38), which is suitable to engage with the at least one recessed section (36, 38) of an allocated side wall (13, 14) of an adjacent battery module (1), or, respectively, is suitable to receive the at least one protruding section (35, 37) of an allocated side wall (13, 14) of an adjacent battery module (1).

6. The battery module according to Claim 5, in which the spatial structure of the side walls (13, 14) is designed to be complementary to that of the side walls (14, 13) of adjacent battery modules (1).

7. The battery module according to any one of Claims 1 to 6, having a connection plate (24), by means of which the housing assembly (12, 13, 14) of the battery module (1) can be closed on one of its end walls and which has a connection terminal (25, 26) for each of the two bus rails of the battery module (1), wherein each connection terminal (25, 26) is designed as a double nut connection and each can be connected on its exterior side.

8. The battery module according to Claim 7, wherein the connection ends of the bus rails of the battery module (1) can be bolted onto the connection terminals (25, 26) of its connection plate (24).

9. The battery module according to any one of Claims 1 to 8, in which every cell connector (6) has a contact link (27), which serves to connect two battery cells (3) with each other and which, for this purpose, has a first contact section (28), which can be connected to a cell terminal (29) of the first battery cell (3), a second contact section (30), which can be connected to a cell terminal (29) of the other battery cell (3), and a compensating section (31), which is arranged between the first (28) and the second contact section (30) and by means of which positioning or manufacturing deviations between the fixed-position battery cells (3) which are to be connected to each other via the cell connector (6) can be compensated for, and in which every cell connector (6) has a connecting link (32), by means of which the cell connector (6) can be connected to the control circuit board (4) of the control assembly (4, 5) of the battery module (1), which is attached to the contact link (27) of the cell connector (6), by means of which status parameters of the battery cells (3) can be transmitted to the control circuit board (4) of the control assembly (4, 5) of the battery module (1), by means of which, in cooperation with the control circuit board (4), uneven charge statuses between the two battery cells (3) of the battery module (1), which are connected with each other via the contact link (27) of the cell connector (6), can be balanced, preferably balanced automatically, and wherein the flexibility of said connecting link (32) is significantly greater than that of the contact link (27) .

10. The battery module according to Claim 9, wherein the temperature of each battery cell (3) can be monitored in its control circuit board (4).

11. The battery module according to any one of Claims 1 to 10, in which an insulating film (33) is arranged between the battery cells (3) of the battery unit (2), by means of which film the individual battery cells (3) of the battery unit (2) can be electrically insulated from each other.

12. A battery arrangement of a plurality of battery modules (1) according to any one of Claims 1 to 11, in which the individual battery modules (1) are arranged in units which are spatially separated from each other.

13. A battery module according to any one of Claims 1 to 11, in which an end wall of the battery unit (2) bears against a housing end wall (7) which is arranged in a fixed position relative to a housing assembly (12, 13, 14) of the battery module (1), and a tensioning element (8) is arranged at the end wall of the battery unit (2) opposite from the fixed-position housing end wall (7), which tensioning element (8) is adjustable in the longitudinal direction of the battery unit (2) toward the fixed-position housing end wall (7).

14. The battery module according to Claim 13, wherein rods (9) are arranged between its fixed-position housing end wall (7) and its tensioning element (8), which rods (9) have threaded sections (10) with tensioning nuts (11) on their sides facing the tensioning element (8), which threaded sections and nuts are used to adjust the tensioning element (8) in the direction toward the fixed-position housing end wall (7).

## Revendications

1. Module de batterie pour un système de batterie présentant une pluralité de tels modules de batterie (1), avec une unité de batterie (2) qui présente une pluralité d'éléments de batterie (3) reliés les uns aux autres, un module de boîtier (12, 13, 14) avec une plaque de base (12) et deux parois latérales (13, 14) disposées de manière située en vis-à-vis l'une de l'autre qui peuvent être reliées, de préférence au moyen de raccords vissés (19), avec la plaque de base (12), une coque de réception (20) qui est formée en plastique, repose sur le côté intérieur de la plaque de base (12) et présente sur ses côtés longitudinaux des bords repliés (21, 22) saillants en direction vers le haut entre lesquels une partie inférieure de l'unité de batterie (2) du module de batterie (1) peut être réceptionnée, et un couvercle de boîtier (34), **caractérisé en ce que** le module de batterie (1) possède un module de commande (4, 5) qui présente une platine de commande (4) pour la surveillance et le réglage du fonctionnement de l'unité de batterie (2) et un cadre de support (5), lequel est monté sur l'unité de batterie (2) et au niveau duquel des connecteurs d'éléments (6) sont disposés, au moyen desquels il est possible de respectivement relier entre eux deux éléments de batterie (3) de l'unité de batterie (2), que le module de commande (4, 5) est disposé avec sa platine de commande (4) et son cadre de support (5) entre le côté supérieur de l'unité de batterie (2) et le couvercle de boîtier (34), et que les parois latérales (13, 14) présentent, au niveau de leurs bords longitudinaux inférieurs (15) sur leur côté intérieur, des saillies longitudinales (16) qui se mettent en prise avec des évidements longitudinaux (18) réalisés au niveau de bords longitudinaux (17) associés de la plaque de base (12).

2. Module de batterie selon la revendication 1, dont les parois latérales (13, 14) sont réalisées avec une pluralité d'ailettes de refroidissement (23) sur leur surface extérieure.

3. Module de batterie selon la revendication 1 ou 2, dont les parois latérales (13, 14) sont refroidies à l'eau.

4. Module de batterie selon la revendication 1 ou 2, dont les parois latérales (13, 14) sont refroidies à l'air.

5. Module de batterie selon l'une des revendications 1 à 4, dans lequel la paroi latérale (14, 13) présente une structure spatiale avec au moins une partie saillante (35, 37) et au moins une partie évidée (36, 38), laquelle convient pour se mettre en prise avec l'au moins une partie évidée (36, 38) de la paroi latérale (13, 14) associée d'un module de batterie (1) voisin ou pour la mise en prise dans laquelle l'au moins une partie saillante (35, 37) de la paroi latérale (13, 14) associée d'un module de batterie (1) voisin convient.

6. Module de batterie selon la revendication 5, dans lequel la structure spatiale des parois latérales (13, 14) est réalisée de manière complémentaire à celle des parois latérales (14, 13) de modules de batterie (1) voisins.

7. Module de batterie selon l'une des revendications 1 à 6, avec une plaque de raccordement (24) au moyen de laquelle le module de boîtier (12, 13, 14) du module de batterie (1) peut être fermé au niveau d'un côté frontal de ce ou ces mêmes et qui présente une borne de raccordement (25, 26) pour chacune des deux barres conductrices du module de batterie (1), dans lequel chaque borne de raccordement (25, 26) est réalisée en tant qu'assemblage à double écrou et peut être raccordée sur son côté extérieur.

8. Module de batterie selon la revendication 7, dont la plaque de raccordement (24) peut être vissée au niveau de ses bornes de raccordement (25, 26) sur des extrémités de raccordement des barres conductrices du module de batterie (1).

9. Module de batterie selon l'une des revendications 1 à 8, dans lequel chaque connecteur d'élément (6) possède un organe de contact (27) qui sert au raccordement de deux éléments de batterie (3) entre eux et présente à cet effet une première partie de contact (28) qui peut être raccordée à une borne d'élément (29) de l'un des éléments de batterie (3), une deuxième partie de contact (30) qui peut être raccordée à une borne d'élément (29) de l'autre élément de batterie (3), et une partie de compensation (31) qui est disposée entre la première (28) et la deuxième partie de contact (30) et au moyen de laquelle il est possible de compenser des différences de fabrication et de position entre les éléments de batterie (3) fixés et à raccorder entre eux au moyen du connecteur d'éléments (6), et un organe de raccordement (32) au moyen duquel le connecteur d'éléments (6) peut être raccordé à la platine de commande (4) du module de commande (4, 5) du module de batterie (1), lequel est agencé sur l'organe de contact (27) du connecteur d'éléments (6), au moyen duquel des paramètres d'état des éléments de batterie (3) peuvent être retransmis à la platine de commande (4) du module de commande (4, 5) du module de batterie (1), au moyen duquel, en coopération avec la platine de commande (4), il est possible de compenser de préférence automatiquement des états de charge inégaux entre les deux éléments de batterie (3) du module de batterie (1) raccordés entre eux grâce à l'organe de contact (27) du connecteur d'éléments (6), et dont la flexibilité est nettement supérieure en comparaison avec celle de l'organe de contact (27).

10. Module de batterie selon la revendication 9, dans la platine de commande (4) duquel il est possible de surveiller la température de chaque élément de batterie (3).

11. Module de batterie selon l'une des revendications 1 à 10, dans lequel un film isolant (33) est disposé entre les éléments de batterie (3) de l'unité de batterie (2) au moyen duquel il est possible d'isoler électriquement les uns par rapport aux autres les éléments de batterie (3) individuels de l'unité de batterie (2).

12. Système de batterie à base d'une pluralité de modules de batterie (1) selon l'une des revendications 1 à 11, dans lequel les modules de batterie (1) individuels sont disposés en unités partielles séparées spatialement les unes des autres.

13. Module de batterie selon l'une des revendications 1 à 11, dans lequel l'unité de batterie (2) repose avec une paroi frontale contre une paroi frontale de boîtier (7) disposée de manière fixe par rapport à un boîtier (12, 13, 14) du module de batterie (1), et au niveau de la paroi frontale de l'unité de batterie (2) éloignée de la paroi frontale de boîtier fixe (7) un organe de serrage (8) étant disposé, lequel peut être déplacé en direction longitudinale de l'unité de batterie (2) vers la paroi frontale de boîtier fixe (7) .

14. Module de batterie selon la revendication 13, entre la paroi frontale de boîtier fixe (7) duquel et l'organe de serrage (8) duquel des tiges (9) sont disposées, lesquelles présentent, du côté d'organe de serrage, des parties filetées (10) avec des écrous de serrage (11) au moyen desquels il est possible de déplacer l'organe de serrage (8) en direction de la paroi frontale de boîtier fixe (7).
